# EUROPEAN PATENT SPECIFICATION

(11) **EP 2 153 730 B1**
(45) Date of publication and mention of the grant of the patent: **01.02.2012**
(21) Application number: 08161399.4
(22) Date of filing: 30.07.2008
(51) Int. Cl.: A23L 1/305, A23G 9/38, A23G 9/32

(54) **Frozen confectionery having high protein and low fat content**
Gefrorene Süßware mit hohem Protein- und geringem Fettanteil
Confiserie surgelée disposant d'un contenu à protéines élevées et à faible teneur en gras

(43) Date of publication of application: 17.02.2010
(73) Proprietor: Nestec S.A., 1800 Vevey (CH)
(72) Inventor: Barniol, Alina Maria, 60000 Beauvais (FR); Fosseux, Pierre-Yves, 60650 Le Mont Saint Adrien (FR); Lallemand, Maud, 60000 Beauvais (FR); Schlegel, Myriam, 60000 Fouquenies (FR)
(74) Representative: Baumgartner Harris, Pauline

(56) References cited:
- EP-A- 0 345 226
- EP-B- 0 348 503
- WO-A-2007/071037
- MARSHALL R T ET AL: "Ice Cream. Chapter 4. Composition and Properties, Fifth Edition" ICE CREAM, XX, XX, 1 January 2000 (2000-01-01), pages 22-23,28, XP002282748
- DUBEY U K: "Ice cream shrinkage: a problem for the ice cram industry" J DAIRY SCIENCE, vol. 80, 1997, pages 3439-3444, XP002509858

## Description

### Field of the invention

The present invention relates to frozen confectionery product having a protein content of at least 6 wt%, a fat content of at most 8 wt%, an overrun of at least 50% and comprising emulsifiers in an amount of 0.35 to 0.45 wt%. It also relates to the use of emulsifiers in an amount of 0.35 to 0.45 wt% for stabilising such frozen confectionery and to a method of improving the stability of frozen confectionery by adding emulsifiers in an amount of 0.35 to 0.45 wt% during preparation of said frozen confectionery.

### Background of the invention

Fat plays a very important role in ice cream. It is needed for purposes such as texture, mouth feeling, creaminess and flavour. Its main role is in air bubble stabilisation. Fat is hydrophobic and when air is incorporated in ice cream during the freezing operation, the fat migrates to air bubbles in order to stabilise them. Thus, good stability in ice cream means air bubbles which are well wrapped by fat. If this does not occur and the air bubbles are not well protected, shrinkage may occur and the whole microstructure collapses.

Overrun is therefore also a factor which influences the stability of ice cream. The more the amount of air in a product, the more air bubbles and air bubble surface are generated. Therefore, for a same amount of fat, an overrun increase leads to a deficient fat covering of the air bubbles.

Furthermore, proteins also influence ice cream microstructure. In an ice cream matrix, proteins react with each other to form protein aggregates, which leads to a modification of their structure and size. Protein aggregates are prone to reacting with fat such that the fat cannot migrate to air bubbles. This leads to air bubbles which are poorly covered with fat and leads to shrinkage.

Thus, the amount of fat, the overrun, the amount of proteins are all factors which influence the coating of air bubbles and thus influence the stability of the ice cream.

Nowadays however, the trend is towards the provision of frozen confectionery which are generally considered as healthier and more nutritionally balanced. This generally translates to a lower fat content, which in view of the above leads to a new challenge in terms of stability of the frozen confectionery.

A number of publications disclose the use of lower amounts of fat and protein as partial fat replacer in frozen confectionery to restore the sensory properties lost when reducing fat, such as hardness, chewyness, mouth coating, body and density.

For instance, EP 0 412 590 relates to the use of protein aggregates as fat replacer in compositions such as ice cream.

US 4,855,156 describes a reduced fat whipped frozen confectionery which also comprises denatured protein as partial fat replacement agent.

US 4,853,246 concerns a process for making a high protein product which is low in fat and lactose free. The product may be frozen to be used as an ice cream.

WO 01/64045 relates to a high protein, low caloric dessert which can be aerated.

However, of all these documents, none address the issue of the stability of the product, in particular in terms of shrinkage and in particular when the protein level is even further increased.

### Object of the invention

It is thus an object of the invention to provide a frozen confectionery which is stable to shrinkage while providing health benefits in particular in terms of protein contents and having good organoleptic properties.

### Summary of the invention

The object is solved by means of the independent claims. The dependent claims serve to further develop the central idea of the invention.

Thus, in a first aspect, the invention is concerned with a frozen confectionery product having a protein content of at least 6 wt%, a fat content of at most 8 wt%, an overrun of at least 50% and comprising emulsifiers in an amount of 0.35 to 0.45 wt%.

The use of emulsifiers in an amount of 0.35 to 0.45 wt% for stabilising frozen confectionery product comprising a protein content of at least 6 wt%, a fat content of at most 8 wt% and an overrun of at least 50% thus also forms part of the invention.

In a third aspect, the invention relates to a method for improving the stability of frozen confectionery product comprising a protein content of at least 6 wt%, a fat content of at most 8 wt% and an overrun of at least 50% comprising the step of adding emulsifiers in an amount of 0.35-0.45 wt% during preparation of said frozen confectionery product.

### Detailed description of the invention

The invention relates, in a first aspect, to a frozen confectionery product. By confectionery product is meant any of ice cream, milk shake, frozen milk, frozen yogurt, smoothie, sherbet, milk ice, frozen dairy product, frozen dairy dessert etc.

The frozen confectionery product of the invention has a protein content of at least 6%. In a preferred embodiment, the content of protein is at least 8%, more preferably at least 10%. A high protein content is beneficial for improving the nutritional properties of the frozen confectionery product.

The protein is preferably dairy protein. Typically, the protein may be selected from skimmed milk powder, milk powder, liquid milk, condensed milk, whey protein isolates, whey protein concentrates, whey protein micelles, micellar casein, milk protein concentrate, milk protein isolates, sweet whey powder, whey protein inclusions or any combinations or sub-combinations thereof.

The fat content of the frozen confectionery product of the invention is at most 8wt%. Preferably, it is at most 6wt%. This amount of fat is lower than conventional frozen confectionery products which usually contain at least about 10 wt% fat.

The fat may be selected from any fat source, such as vegetable or animal fat. Preferably, the fat is milk fat.

The products of the invention are thus characterised by a high protein/fat ratio.

In the product of the invention, the overrun is at least 50%. Preferably, it is at least 100%. A high overrun is beneficial in terms of texture of the product. It also improves the organoleptic properties of the product.

The products of the invention also comprise an amount of emulsifier between 0.35 and 0.45 wt%. Preferably, the amount of emulsifier is 0.35 to 0.4 wt%. In another embodiment of the invention, the amount of emulsifier is preferably 0.4 to 0.45 wt%.

Emulsifiers are preferably selected from low or highly unsaturated monodiglycerides, polysorbates, sucrose esters of fatty acids, sucroglycerides, egg yolk, lecithin, propylene glycol esters of fatty acids, sorbitans, polyglycerol ester of fatty acids, lactylates or any combinations thereof. More preferably, they are selected from low unsaturated monodiglycerides and/or polysorbate 80. Most preferably, the emulsifier is low unsaturated monoglyceride.

By low unsaturated monodiglyceride is meant monodiglyceride having a saturation degree of at least 60%.

By highly unsaturated monodiglyceride is meant monodiglyceride having a saturation degree of maximum 40%.

It has surprisingly been found that this optimum value of emulsifier is necessary in order to provide an aerated frozen confectionery with high protein content and low fat content with the desired stability and organoleptic properties. General trends would suggest that a higher amount of emulsifier than in conventional frozen confectionery product, i.e. normally up to 0.3 wt% of emulsifier, would lead to new issues regarding texture and/or organoleptic properties.

However, it has been shown that if the emulsifier is in an amount lower than 0.35wt% or higher than 0.45 wt%, the resulting product has a less desirable texture, for example more watery and less creamy texture, and is more prone to shrinkage.

Shrinkage is defined by the loss of volume of an aerated frozen confectionery product during distribution and storage. It can be measured by experiments well known to the skilled person. For instance, it can be measured by submitting the product to extreme temperature or pressure conditions where the microstructure of the product can eventually collapse and as a result the initial volume of the product is reduced.

Without wishing to be bound by theory, it is believed the level of emulsifier used in the present invention achieves the best protein displacement from the surface of the fat globule and therefore increases the fat functionality. The fat is therefore better able to coat the air bubbles and confer stability to the product.

The amount of fat coverage, the size of protein clots, the amount of fat trapped in protein clots are parameters which indicate the proneness to shrinkage of the aerated frozen products. These parameters can be measured by a skilled person by microscopy, manually or visually by using image processing software, as is known in the art.

Preferably, the frozen confectionery product of the invention have a fat coverage of more than 50%, more preferably more than 65%, most preferably more than 80%.

Protein containing frozen confectionery products have a tendency to aggregate to form protein aggregates or clots. Preferably, proteins are dispersed in the microstructure of the present products in particles having an average diameter of maximum 20 µm. This has the effect of minimising the amount of fat trapped. More preferably, the protein clots are minimized and most preferably they are even not present in the present products.

The amount of fat trapped in the potential presence of protein clots is preferably less than 20%, preferably less than 10% and most preferably less than 5%.

The product of the invention may further comprise stabilisers. Preferably, the stabilisers are selected from gums, locust bean gum, carob bean gum, guar gum, xanthan, carrageenan, sodium carboxymethyl cellulose, sodium alginate, gelatine, gum acacia, gum karaya, oat gum, gum tragacanth, microcrystalline cellulose, hydroxypropyl cellulose gum, arabic gum, pectin, processed Eucheuma sea weed, or any combinations thereof. If stabilisers are present, they are preferably present in an amount of less than 0.35 wt%, more preferably less than 0.25 wt%.

In a preferred embodiment, the frozen confectionery product of the invention further comprises additional minerals and/or vitamins. Preferably, the additional minerals are selected from calcium, magnesium, phosphorous, potassium, sodium, zinc or any combinations thereof.

The vitamins may be selected from vitamin D, cobalamin, riboflavin, pantotenic acid, vitamin A, thiamine, pyridoxine or any combinations thereof.

The product of the invention may further comprise inclusions. By inclusions is meant any particles which can be added to a frozen confectionery products and which are perceivable upon consumption, due to different texture, size etc. These can include chocolate chips, pieces of fruits, nuts etc.

The specific nutritional balance of the frozen confectionery product of the invention is preferably aimed at matching the caloric content and nutritional macronutrient profile of a glass of full milk or low fat milk. Therefore, the amount of fat and protein is preferably adjusted in order to provide the nutritional benefit in one portion for consumption. Typically, this represents about 4.8 g of fat and 8 g of protein per 75g portion of the present product. Preferably, calcium is also added in an amount of 283 mg, so as to match the mineral profile of milk. Calcium may be provided in the form of calcium phosphate, calcium carbonate, calcium lactate, calcium chloride, calcium sulphate, tricalcium citrate, tricalcium phosphate.

In a further embodiment, the present invention provides for the use of emulsifiers in an amount of more than 0.3 wt%, preferably 0.35 to 0.45 wt%, more preferably 0.35 to 0.4 wt%, for stabilising frozen confectionery comprising a protein content of at least 6 wt%, a fat content of at most 8 wt% and an overrun of at least 50%. In another embodiment, the amount of emulsifier is more preferably 0.4 to 0.45 wt%.

The emulsifier may be selected from low or highly unsaturated monodiglycerides, polysorbates, sucrose esters of fatty acids, sucroglycerides, egg yolk, lecithin, propylene glycol esters of fatty acids, sorbitans, polyglycerol ester of fatty acids, lactylates or any combinations thereof. More preferably, it is selected from low unsaturated monodiglycerides and/or polysorbate 80. Most preferably, it is low unsaturated monodiglycerides.

In a further aspect, a method for improving the stability of frozen confectionery product comprising a protein content of at least 6 wt%, a fat content of at most 8 wt% and an overrun of at least 50% comprising the step of adding emulsifiers in an amount of 0.35-0.45 wt%, preferably 0.35 to 0.4wt% during preparation of said frozen confectionery product. In another embodiment, the amount of added emulsifier is 0.4 to 0.45 wt%.

The preparation of the frozen confectionery product comprises the steps of mixing the ingredients, pasteurising the mix, homogenising the mix, ageing the mix, and freezing the mix with simultaneous air incorporation. Preferably, the freezing is a low-temperature freezing step. Such technology is described in patent application WO 2006/0099987, the contents of which are here included by reference, and allows to improve the textural properties of low fat ice cream.

In the method of the present invention, stabilisers are preferably added with the emulsifiers. Stabilisers may be selected from gums, locust bean gum, carob bean gum, guar gum, xanthan, carrageenan, sodium carboxymethyl cellulose, sodium alginate, gelatine, gum acacia, gum karaya, oat gum, gum tragacanth, microcrystalline cellulose, hydroxypropyl cellulose gum, arabic gum, pectin, processed Eucheuma sea weed, or any combinations thereof. Preferably, stabilisers are used in an amount of less than 0.35 wt%, more preferably less than 0.25%.

Thus, the present invention provides the advantages that aerated frozen confectionery product having a high protein content and a low fat content can be produced without impairing the stability of such products. The products are stable to shrinkage and exhibit excellent organoleptic properties. Despite the low amount of fat and the high protein content, the texture remains creamy and smooth. Furthermore, the products are nutritionally balanced and may provide nutritional benefits comparable to milk.

The present invention is further illustrated by means of the following non-limiting examples.

### Examples

### Example 1

The following recipe (Table 1) showed excellent stability and exhibited no shrinkage.

**Table 1**

| **Ingredients** | **Amounts** |
|---|---|
| Sugars | 17% |
| Protein | 13% |
| LU-MDG | 0.4% |
| Stabiliser | 0.05-0.35% |
| Fat | 6% |
| Water | Up to 100% |

| | |
|---|---|
| LU-MDG: low unsaturated mono-diglyceride | |

### Example 2

**Table 2**

| | LU-MDG (Mighty Soft) @ 0.35wt% | Polysorbate 80% @0.35wt% |
|---|---|---|
| -Air bubble size in average (microns) D50 | 100 | 150 |
| -Min. air bubble size (microns) | 10 | 5 |
| -Max air bubble size (microns) | 120 | 250 |
| -Fat coverage (%) | 80 | 65 |
| -Protein clots (microns) | not present | 20 |
| -Fat trapped in protein clots | no fat was trapped | <5% |

Table 2 shows products of the invention manufactured with 0.35% low unsaturated mono-diglycerides (LU-MDG) or polysorbate 80. Both samples showed good shrinkage resistance. Both products showed high fat coverage and no protein clots were formed in the sample containing low unsaturated mono-diglyceride.

### Example 3

A number of aerated frozen recipes were tested using the ingredients shown in the table below (Table 3). The final products were then compared for resistance to shrinkage. This is measured by a method known to a skilled person, which involves the steps of submitting the product to heat shock treatment, which involves temperature fluctuations from -4 to -20°C in 4 cycles:

**Table 3**

| | *Trial 1* | *Trial 2* | *Trial 3* | *Trial 4* | *Trial 5* | *Trial 6* | *Trial 7* |
|---|---|---|---|---|---|---|---|
| **Sugars** | 15% | 15% | 15% | 15% | 15% | 15% | 15% |
| **Protein (WPC + milk protein)** | 12% | 12% | 12% | 12% | 12% | 12% | 12% |
| **Fat** | 7% | 7% | 7% | 7% | 7% | 7% | 7% |
| **Emulsifier** | LU-MDG: 0.3% | LU-MDG: 0.5% | PS80: 0.3% | PS80: 0.5% | SE: 0.5% | HU-MDG: 0.1% | - |
| **Water** | Up to 100% | Up to 100% | Up to 100% | Up to 100% | Up to 100% | Up to 100% | Up to 100% |

| | | | | | | | |
|---|---|---|---|---|---|---|---|
| WPC: whey protein concentrate LU-MDG: low unsaturated mono-diglyceride HU-MDG: highly unsaturated mono-diglyceride PS80: polysorbate 80 SE: sucrose esters | | | | | | | |

All the trials exhibited shrinkage and were not acceptable in terms of stability and texture.

### Example 4

Further trials (shown in table 4) were made. The recipes contained carrageenan as a stabiliser in an amount of 0.02%. Trial 13 additionally comprised 0.5% microcrystalline cellulose and carboxymethyl cellulose as stabilisers.

**Table 4**

| | *Trial 8* | *Trial 9* | *Trial* 10 | *Trial* 11 | *Trial* 12 | *Trial* 13 |
|---|---|---|---|---|---|---|
| **Sugars** | 15% | 15% | 15% | 15% | 15% | 15% |
| **Protein (WPC + milk protein)** | 12% | 12% | 12% | 12% | 12% | 12% |
| **Fat** | 7% | 7% | 7% | 7% | 7% | 7% |
| **Emulsifier** | LU-MDG: 0.5% | LU-MDG: 0.8% | LU-MDG: 0.5%+ PS80: 0.1% | LU-MDG: 0.5%+ PS80: 0.3% | LU-MDG: 0.5%+ PGMS: 0.1% | LU-MDG: 0.5% |
| **Water** | Up to 100% | Up to 100% | Up to 100% | Up to 100% | Up to 100% | Up to 100% |

Once again, all trials showed frozen products prone to shrinkage.

### Example 5

In the following trial, a commercially available emulsifier/stabiliser blend comprising low unsaturated monodiglyceride as emulsifier and carob bean gum, guar gum, carrageenan, and sodium alginate as stabilisers was used.

**Table 5**

| **Ingredients** | **Amounts** |
|---|---|
| Sugars | 15% |
| Proteins (SMP + milk protein) | 12% |
| Fat | 6% |
| LU-MDG | 0.3% |
| Carob bean gum | 0.06% |
| Guar gum | 0.1% |
| Carrageenan | 0.02% |
| Sodium alginate | 0.1% |
| Water | Up to 100% |

| | |
|---|---|
| SMP: skimmed milk powder LU-MDG: low unsaturated monodiglyceride | |

The product was unstable and was shown to suffer from shrinkage.

### Example 6

The recipes correspond to trials 1-5 and 7 as described in example 3. Trial 6 differs in trial 6 of example 3 in that 0.3% of HU-MDG is used.

**Table 6**

| **Property** | *Trial 1* | *Trial 2* | *Trial 3* | *Trial 4* | *Trial 5* | *Trial 6* | *Trial 7* |
|---|---|---|---|---|---|---|---|
| **Air bubble size in average [µm] (D50 value)** | 150 | 100 | 150 | 120 | 120 | 120 | 120 |
| **Min. air bubble size [µm]** | 5 | 5 | 5 | 5 | 5 | 5 | 5 |
| **Max. air bubble size [µm]** | 200 | 150 | 200 | 250 | 250 | 250 | 200 |
| **Fat coverage (%)** | 60 | 65 | 50 | 50 | 50 | 60 | 60 |
| **Protein clots [µm]** | 150 | 150 | 180 | 180 | 180 | 200 | 150 |
| **Fat trapped in protein clots (%)** | 30 | 30 | 35 | 30 | 35 | 35 | 35 |

The above table shows the best result for trial 2, i.e. for a composition comprising low unsaturated monodiglyceride as emulsifier. However, the product still showed too big protein clots which impact on the fat coverage and the amount of fat trapped.

In the following the method used for the qualitative evaluation of the ice cream microstructure by microscopy will be described. The method is applicable to ice cream finished products and it can be applied to:
- To determine the percentage of fat covering air bubbles.
- To evaluate state of proteins
- To characterize ice cream microstructures

### DEFINITIONS AND ABBREVIATIONS

The following definitions apply to this method and are used in the framework of the description of the present invention:
- "Clustered fat": The fat particle size derivate of the process of clustering/aggregating in freezer (partial coalescence) which leads to the development of a continuous internal fat network or matrix structure in the product.
- "Matrix": Unfrozen fraction of the product. The matrix is composed by sugars, proteins, no frozen water.
- "Air bubbles": Result of the aeration and freezing of the ice cream.
- "Naked area": surface of the air bubble no covered by fat.
- "Proteins": Large molecules composed of one or more chains of amino acids in a specific order determined by the base sequence of nucleotides in the DNA coding for the protein.

### PRINCIPLES OF THE EVALUATION METHOD

To see the air bubbles and fat particles/clusters, the microscope slides are prepared with a small amount of ice cream sample and viewed with an optical microscope under regular or polarized light.

To see the proteins, the ice cream sample is stained by using a specific colours and view as mentioned before.

Regarding the numerical determination of minimum and maximum air bubble size or protein clots, average values (D50 values) are calculated by a software.

### MATERIALS USED

An optical microscope:
• capable of magnification of 100 to 1000 times (objective x eyepiece)
• ideally with polarizing mode
• preferably equipped with a camera for record keeping and further image processing.

## Claims

1. Frozen confectionery product having a protein content of at least 6 wt%, preferably at least 8 wt%, more preferably at least 10 wt%, a fat content of at most 8 wt%, an overrun of at least 50% and comprising emulsifiers in an amount of 0.35 to 0.45 wt%.

2. Frozen confectionery product according to claim 1, wherein the protein is dairy protein selected from skimmed milk powder, milk powder, liquid milk, condensed milk, whey protein isolates, whey protein concentrates, whey protein micelles, micellar casein, milk protein concentrate, milk protein isolates, sweet whey powder, whey protein inclusions or any combinations or sub-combinations thereof.

3. Frozen confectionery product according to any of the preceding claims, wherein the fat content is at most 6 wt%.

4. Frozen confectionery product according to any of the preceding claims, wherein the overrun is at least 100%.

5. Frozen confectionery product according to any of the preceding claims, wherein the emulsifier is selected from low or highly unsaturated monodiglycerides, polysorbates, sucrose esters of fatty acids, sucroglycerides, egg yolk, lecithin, propylene glycol esters of fatty acids, sorbitans, polyglycerol ester of fatty acids, lactylates or any combinations thereof, preferably the emulsifier is low unsaturated monodiglycerides and/or polysorbate 80.

6. Frozen confectionery product according to any of the preceding claims, wherein the emulsifier is present in an amount of 0.35-0.4 wt%.

7. Frozen confectionery product according to any of claims 1 to 5, wherein the emulsifier is present in an amount of 0.4-0.45 wt%.

8. Frozen confectionery product according to any of the preceding claims, which comprises stabilisers, preferably selected from gums, locust bean gum, guar gum, xanthan, carrageenan, sodium carboximethyl cellulose, sodium alginate, gelatine, gum acacia, gum karaya, oat gum, gum tragacanth, microcrystalline cellulose, hydroxypropyl cellulose gum arabic gum, pectin, processed Eucheuma sea weed, or any combinations thereof.

9. Frozen confectionery product according to any of the preceding claims, which comprises additional minerals and/or vitamins.

10. Frozen confectionery product according to any of the preceding claims, which has a fat coverage of more than 50%, preferably more than 65%, more preferably more than 80%.

11. Frozen confectionery product according to any of the preceding claims, which comprises no protein clots or comprises protein clots having an average diameter D50 of maximum 20 microns.

12. Frozen confectionery product according to claim 11, wherein the amount of fat trapped in protein clots is less than 20%, preferably less than 10%, more preferably less than 5% of the total amount of fat in the frozen confectionery product.

13. Use of emulsifiers in an amount of more than 0.3 wt% for stabilising frozen confectionery product comprising a protein content of at least 6 wt%, a fat content of at most 8 wt% and an overrun of at least 50%.

14. Method for improving the stability of frozen confectionery product comprising a protein content of at least 6 wt%, a fat content of at most 8 wt% and an overrun of at least 50% comprising the step of adding emulsifiers in an amount of 0.35-0.45 wt% during preparation of said frozen confectionery product.

15. Method according to claim 14, wherein stabilisers, preferably selected from gums, locust bean gum, guar gum, xanthan, carrageenan, sodium carboximethyl cellulose, sodium alginate, gelatine, gum acacia, gum karaya, oat gum, gum tragacanth, microcrystalline cellulose, hydroxypropyl cellulose gum arabic gum, pectin, processed Eucheuma sea weed or any combinations thereof, are added with the emulsifiers.

## Patentansprüche

1. Gefrorenes Süßwarenerzeugnis, mit einem Proteingehalt von mindestens 6 Gew.-%, vorzugsweise mindestens 8 Gew.-%, noch bevorzugter mindestens 10 Gew.-%, einem Fettgehalt von maximal 8 Gew.-%, einem Luftzuschlag von mindestens 50%, und das Emulgatoren in einer Menge von 0,35 bis 0,45 Gew.-% enthält.

2. Gefrorenes Süßwarenerzeugnis nach Anspruch 1, wobei das Protein Milchprotein ist, das ausgewählt ist aus Magermilchpulver, Milchpulver, flüssiger Milch, Kondensmilch, Molkenproteinisolaten, Molkenproteinkonzentraten, Molkenproteinmizellen, Mizellarcasein, Milchproteinkonzentrat, Milchproteinisolaten, Süßmolkenpulver, Molkenproteineinschlüssen, oder beliebige Kombinationen oder Unterkombinationen davon.

3. Gefrorenes Süßwarenerzeugnis nach einem der vorhergehenden Ansprüche, wobei der Fettgehalt maximal 6 Gew.-% beträgt.

4. Gefrorenes Süßwarenerzeugnis nach einem der vorhergehenden Ansprüche, wobei der Luftzuschlag mindestens 100% ist.

5. Gefrorenes Süßwarenerzeugnis nach einem der vorhergehenden Ansprüche, wobei der Emulgator ausgewählt ist aus niedrig- oder hochungesättigten Monodiglyceriden, Polysorbaten, Zuckerestern von Fettsäuren, Zuckerglyceriden, Eigelb, Lecithin, Propylenglykolestern von Fettsäuren, Sorbitanen, Polyglycerinestern von Fettsäuren, Lactylaten oder beliebigen Kombinationen davon, wobei der Emulgator vorzugsweise niedrigungesättigte Monodiglyceride und/oder Polysorbat 80 ist.

6. Gefrorenes Süßwarenerzeugnis nach einem der vorhergehenden Ansprüche, wobei der Emulgator in einer Menge von 0,35-0,4 Gew.-% vorliegt.

7. Gefrorenes Süßwarenerzeugnis nach einem der Ansprüche 1 bis 5, wobei der Emulgator in einer Menge von 0,4 bis 0,45 Gew.-% vorliegt.

8. Gefrorenes Süßwarenerzeugnis nach einem der vorhergehenden Ansprüche, das Stabilisatoren enthält, die vorzugsweise ausgewählt sind aus Gummen, Johannisbrotkernmehl, Guarkernmehl, Xanthan, Carrageen, Natriumcarboxymethylcellulose, Natriumalginat, Gelatine, Gummiarabikum, Karayagummi, Hafergummi, Tragantgummi, mikrokristalliner Cellulose, Hydroxypropylcellulosegummi, arabischem Gummi, Pektin, behandelten Eucheuma-Algen oder beliebigen Kombinationen davon.

9. Gefrorenes Süßwarenerzeugnis nach einem der vorhergehenden Ansprüche, welches zusätzliche Mineralien und/oder Vitamine enthält.

10. Gefrorenes Süßwarenerzeugnis nach einem der vorhergehenden Ansprüche, das eine Fett-Abdeckung von mehr als 50%, vorzugsweise mehr als 65%, noch bevorzugter mehr als 80% hat.

11. Gefrorenes Süßwarenerzeugnis nach einem der vorhergehenden Ansprüche, das keine Proteinkoagulate enthält oder Proteinkoagulate mit einem mittleren Durchmesser D50 von maximal 20 Mikrometern enthält.

12. Gefrorenes Süßwarenerzeugnis nach Anspruch 11, wobei die Menge an in Proteinkoagulaten eingeschlossenem Fett weniger als 20%, vorzugsweise weniger als 10%, noch bevorzugter weniger als 5% der Gesamtmenge an Fett in dem gefrorenen Süßwarenerzeugnis beträgt.

13. Verwendung von Emulgatoren in einer Menge von mehr als 0,3 Gew.-% zur Stabilisierung eines gefrorenen Süßwarenerzeugnisses, das einen Proteingehalt von mindestens 6 Gew.-%, einen Fettgehalt von maximal 8 Gew.-% und einen Luftzuschlag von mindestens 50% hat.

14. Verfahren zur Verbesserung der Stabilität eines gefrorenen Süßwarenerzeugnisses, das einen Proteingehalt von mindestens 6 Gew.-%, einen Fettgehalt von maximal 8 Gew.-% und einen Luftzuschlag von mindestens 50% hat, bei dem bei der Herstellung des Süßwarenerzeugnisses Emulgatoren in einer Menge von 0,35 bis 0,45 Gew.-% zugegeben werden.

15. Verfahren nach Anspruch 14, wobei mit den Emulgatoren Stabilisatoren hinzugegeben werden, die vorzugsweise ausgewählt werden aus Gummen, Johannisbrotkernmehl, Guarkernmehl, Xanthan, Carrageen, Natriumcarboxymethylcellulose, Natriumalginat, Gelatine, Gummiarabikum, Karayagummi, Hafergummi, Tragantgummi, mikrokristalliner Cellulose, Hydroxypropylcellulosegummi, arabischem Gummi, Pektin, behandelten Eucheuma-Algen oder beliebigen Kombinationen davon.

## Revendications

1. Produit de confiserie surgelé ayant une teneur en protéine d'au moins 6 % en poids, de préférence au moins 8 % en poids, encore plus préférentiellement au moins 10 % en poids, une teneur en matière grasse d'au plus 8 % en poids, un foisonnement d'au moins 50 %, et comprenant des émulsifiants dans une quantité de 0,35 à 0,45 % en poids.

2. Produit de confiserie surgelé selon la revendication 1, dans lequel la protéine est une protéine d'origine laitière sélectionnée à partir de poudre de lait écrémé, poudre de lait, lait liquide, lait condensé, isolats de protéine de lactosérum, concentrés de protéine de lactosérum, micelles de protéine de lactosérum, caséine micellaire, concentré de protéine de lait, isolats de protéine de lait, poudre de lactosérum douce, inclusions de protéine de lactosérum ou toute combinaison ou sous-combinaison de ceux-ci.

3. Produit de confiserie surgelé selon l'une quelconque des revendications précédentes, dans lequel la teneur en matière grasse est au plus 6 % en poids.

4. Produit de confiserie surgelé selon l'une quelconque des revendications précédentes, dans lequel le foisonnement est d'au moins 100 %.

5. Produit de confiserie surgelé selon l'une quelconque des revendications précédentes, dans lequel l'émulsifiant est sélectionné à partir de monodiglycérides faiblement ou hautement insaturés, polysorbates, esters de saccharose d'acides gras, sucroglycérides, jaune d'oeuf, lécithine, esters de glycol propylénique d'acides gras, sorbitans, ester de polyglycérol d'acides gras, lactylates ou toute combinaison de ceux-ci, de préférence l'émulsifiant est des monodiglycerides faiblement insaturés et/ou du polysorbate 80.

6. Produit de confiserie surgelé selon l'une quelconque des revendications précédentes, dans lequel l'émulsifiant est présent selon une quantité de 0,35 à 0,4 % en poids.

7. Produit de confiserie surgelé selon l'une quelconque des revendications 1 à 5, dans lequel l'émulsifiant est présent selon une quantité de 0,4 à 0,45 % du poids.

8. Produit de confiserie surgelé selon l'une quelconque des revendications précédentes, qui comprend des stabilisateurs, de préférence sélectionnés à partir de gommes, gomme de caroube, gomme de guar, xanthane, carraghénane, carboxyméthylcellulose sodique, alginate de sodium, gélatine, gomme arabique, gomme karaya, gomme d'avoine, gomme adragante, cellulose microcristalline, gomme de cellulose hydroxypropyle, gomme arabique, pectine, algue Eucheuma traitée, ou toute combinaison de ceux-ci.

9. Produit de confiserie surgelé selon l'une quelconque des revendications précédentes, qui comprend des minéraux et/ou vitamines supplémentaires.

10. Produit de confiserie surgelé selon l'une quelconque des revendications précédentes, qui a une couverture de matière grasse de plus de 50 %, de préférence de plus de 65 %, encore plus préférentiellement de plus de 80 %.

11. Produit de confiserie surgelé selon l'une quelconque des revendications précédentes, qui ne comporte pas de caillots de protéine ou qui comprend des caillots de protéine ayant un diamètre moyen D50 d'au maximum 20 microns.

12. Produit de confiserie surgelé selon la revendication 11, dans lequel la quantité de matière grasse piégée dans des caillots de protéine est inférieure à 20 %, de préférence inférieure à 10 %, encore plus préférentiellement inférieure à 5 % de la quantité totale de matière grasse dans le produit de confiserie surgelé.

13. Utilisation d'émulsifiants dans une quantité de plus de 0,3 % en poids pour la stabilisation d'un produit de confiserie surgelé comprenant une teneur en protéine d'au moins 6 % en poids, une teneur en matière grasse d'au plus 8 % en poids et un foisonnement d'au moins 50 %.

14. Procédé pour améliorer la stabilité d'un produit de confiserie surgelé comprenant une teneur en protéine d'au moins 6 % en poids, une teneur en matière grasse d'au plus 8 % en poids et un foisonnement d'au moins 50 %, comprenant l'étape consistant à ajouter des émulsifiants dans une quantité de 0,35 à 0,45 % en poids pendant la préparation dudit produit de confiserie surgelé.

15. Procédé selon la revendication 14, dans lequel des stabilisateurs, de préférence sélectionnés à partir de gommes, gomme de caroube, gomme de guar, xanthane, carraghénane, carboxyméthylcellulose sodique, alginate de sodium, gélatine, gomme arabique, gomme karaya, gomme d'avoine, gomme adragante, cellulose microcristalline, gomme de cellulose hydroxypropyle, gomme arabique, pectine, algue Eucheuma traitée, ou toute combinaison de ceux-ci, sont ajoutés avec les émulsifiants.
